(19) Europäisches Patentamt
European Patent Office
Office européen des brevets

(11) EP 3 562 980 B1

(12) EUROPEAN PATENT SPECIFICATION

(45) Date of publication and mention of the grant of the patent:
**10.01.2024 Bulletin 2024/02**

(21) Application number: **17832226.9**

(22) Date of filing: **21.12.2017**

(51) International Patent Classification (IPC):
***D01F 1/10*** *(2006.01)* ***D01F 6/62*** *(2006.01)*
***B33Y 70/00*** *(2020.01)*

(52) Cooperative Patent Classification (CPC):
**D01F 1/10; B33Y 70/00; D01F 6/62**

(86) International application number:
**PCT/EP2017/083975**

(87) International publication number:
**WO 2018/122081 (05.07.2018 Gazette 2018/27)**

(54) **FIBERS COMPRISING FIBRILLATED REINFORCEMENT MATERIAL**
FASERN MIT FIBRILLIERTEM VERSTÄRKUNGSMATERIAL
FIBRES COMPRENANT UN MATÉRIAU DE RENFORCEMENT FIBRILLÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2016 US 201662439243 P**

(43) Date of publication of application:
**06.11.2019 Bulletin 2019/45**

(73) Proprietor: **SABIC Global Technologies B.V.**
**4612 PX Bergen op Zoom (NL)**

(72) Inventors:
- **RAMAKRISHNAN, Vaidyanath**
**6160 GA Geleen (NL)**
- **JOFORE, Bruke**
**6160 GA Geleen (NL)**
- **GOOSSENS, Johannes Gerardus Petrus**
**6160 GA Geleen (NL)**
- **GOOSSENS, Johannes Martinus Dina**
**6160 GA Geleen (NL)**

(74) Representative: **Sabic Intellectual Property Group**
**Sabic Intellectual Property Department**
**P.O. Box 3008**
**6160 GA Geleen (NL)**

(56) References cited:
**WO-A1-03/029536**
**WO-A1-2004/099314**
**WO-A1-2015/134316**
**WO-A1-2015/200780**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 562 980 B1

## Description

TECHNICAL FIELD

The present disclosure relates to the field of polymeric fibers and to the field of fibrillated reinforcement materials.

BACKGROUND

Polymer fibers spun from pure resins often possess poor mechanical properties for a given application area: such as low modulus, fatigue and wear properties. For this reason, articles - e.g., carpets - that are formed from polymeric fibers may exhibit suboptimal properties. Accordingly, there is a long-felt need in the art for improved fiber materials. Polymer composites are disclosed in for example WO03029536A1, which presents polyolefin-based synthetic fibers; WO2004099314A1, which presents polyesters comprising aramid microfibers; WO2015134316A1, which presents thermoplastic polymer compositions comprising fibrilforming fluoropolymers; and in WO2015200780A1, which presents nanocellulose-polymer composites.

SUMMARY

The present disclosure addresses the use of reinforcement materials fibrillated fluoropolymer PTFE or ultra-high molecular weight polyethylene (UHMW-PE)) to reinforce a thermoplastic matrix for fiber spinning applications. Reinforcement is only achieved by fibrillating the additive within the matrix. The fibrillation is achieved by flow-induced orientation. These composite fibers show enhanced properties such as high modulus, improved fatigue, wear and frictional performance. As one example, fibrillated fluoropolymer reinforced resins may be spun for fiber application, as a formulation of fluoropolymer in a resin matrix yielding a fiber with enhanced properties such as high modulus, excellent fatigue and wear/friction performance, and dimensional accuracies.

In one aspect, the present disclosure provides composite fibers, comprising: a thermoplastic matrix polymer, the composite fiber having a diameter in the range of from about 2 micrometers to about 4 millimeters, and the composite fiber comprising a plurality of fibrillated reinforcement material regions disposed within the thermoplastic matrix polymer, and the melting temperature of the thermoplastic matrix material, being below the melting temperature of the fibrillated reinforcement material. The thermoplastic matrix polymer is also interchangeably referred to in the context of this invention as the thermoplastic matrix material.

Also provided are articles, the articles comprising a plurality of composite fibers according to the present disclosure, the article being characterized as a woven article, a non-woven article, or any combination thereof.

Further provided are methods, comprising: using a composite fiber according to the present disclosure in additively manufacturing at least a portion of an article.

DETAILED DESCRIPTION OF ILLUSTRATIVE EMBODIMENTS

Unless otherwise defined, all technical and scientific terms used herein have the same meaning as commonly understood by one of ordinary skill in the art. In case of conflict, the present document, including definitions, will control. Preferred methods and materials are described below, although methods and materials similar or equivalent to those described herein can be used in practice or testing. The materials, methods, and examples disclosed herein are illustrative only and not intended to be limiting.

The singular forms "a," "an," and "the" include plural referents unless the context clearly dictates otherwise. As used in the specification and in the claims, the term "comprising" may include the embodiments "consisting of" and "consisting essentially of." The terms "comprise(s)," "include(s)," "having," "has," "can," "contain(s)," and variants thereof, as used herein, are intended to be open-ended transitional phrases, terms, or words that require the presence of the named ingredients/steps and permit the presence of other ingredients/steps. However, such description should be construed as also describing compositions or processes as "consisting of" and "consisting essentially of" the enumerated ingredients/steps, which allows the presence of only the named ingredients/steps, along with any impurities that might result therefrom, and excludes other ingredients/steps. It is to be understood that the terminology used herein is for the purpose of describing particular aspects only and is not intended to be limiting. As used in the specification and in the claims, the term "comprising" can include the embodiments "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

Numerical values in the specification and claims of this application, particularly as they relate to polymers or polymer compositions, reflect average values for a composition that may contain individual polymers of different characteristics. Furthermore, unless indicated to the contrary, the numerical values should be understood to include numerical values which are the same when reduced to the same number of significant figures and numerical values which differ from the stated value by less than the experimental error of conventional measurement technique of the type described in the present application to determine the value.

All ranges disclosed herein are inclusive of the recited endpoint and independently combinable (for example, the range of "from 2 grams (g) to 10 grams" is inclusive of the endpoints, 2 grams and 10 grams, and all the intermediate values). The endpoints of the ranges and any values disclosed herein are not limited to the precise range or value; they are sufficiently imprecise to include values approximating these ranges and/or values.

As used herein, approximating language may be applied to modify any quantitative representation that may vary without resulting in a change in the basic function to which it is related. Accordingly, a value modified by a term or terms, such as "about" and "substantially," may not be limited to the precise value specified, in some cases. In at least some instances, the approximating language may correspond to the precision of an instrument for measuring the value. The modifier "about" should also be considered as disclosing the range defined by the absolute values of the two endpoints. For example, the expression "from about 2 to about 4" also discloses the range "from 2 to 4." The term "about" may refer to plus or minus 10% of the indicated number. For example, "about 10%" may indicate a range of 9% to 11%, and "about 1" may mean from 0.9 to 1.1. Other meanings of "about" may be apparent from the context, such as rounding off, so, for example "about 1" may also mean from 0.5 to 1.4.

As used herein, "Tm" refers to the melting point at which a polymer completely loses its orderly arrangement. As used herein, "Tc" refers to the crystallization temperature at which a polymer gives off heat to form a crystalline arrangement. The terms "Glass Transition Temperature" or "Tg" may be measured using, e.g., a differential scanning calorimetry method and expressed in degrees Celsius.

As used herein, "matrix polymer component", also referred to as "thermoplastic matrix material", refers to one or more polymers that are not fibrillated. Examples of suitable matrix polymers include, but are not limited to, amorphous, crystalline, and semi-crystalline thermoplastic materials such as polyolefins (for example, linear or cyclic polyolefins such as polyethylene, chlorinated polyethylene, polypropylene, and the like); polyesters (for example, polyethylene terephthalate, polybutylene terephthalate, polycyclohexylmethylene terephthalate, and the like); arylate esters; polyamides; polysulfones (including hydrogenated polysulfones, and the like);; ABS resins; polystyrenes (for example hydrogenated polystyrenes, and atactic polystyrenes, hydrogenated polystyrenes such as polycyclohexyl ethylene, styrene-co-acrylonitrile, styrene-co-maleic anhydride, and the like); polybutadiene; poly(meth)acrylates (for example, poly(methyl methacrylate) (PMMA), methyl methacrylate-polyimide copolymers, and the like); polyacrylonitrile; polyacetals; polycarbonates; polyphenylene ethers (for example, those derived from 2,6-dimethylphenol and copolymers with 2,3,6-trimethylphenol, and the like); ethylene-vinyl acetate copolymers; polyvinyl acetate; liquid crystalline polymers; fluoropolymers such as ethylene-tetrafluoroethylene copolymer, polyvinyl fluoride, and polyvinylidene fluoride, polytetrafluoroethylene (provided that the fluoropolymer has a lower softening temperature than the fluoropolymer component described below); polyvinyl chloride, polyvinylidene chloride; and combinations comprising at least one of the foregoing polymers. The matrix polymer may generally be provided in any form, including but not limited to powders, plates, pellets, flakes, chips, whiskers, and the like. The matrix material is suitably one that has a lower melting temperature than the melting temperature of the reinforcement material.

A variety of reinforcement materials may be used in the disclosed fibers selected from UHMW-PE and PTFE. UHMW-PE may have a molecular weight in the range of from about 1 million to about 10 million g/mole.

Fluoropolymers and other materials suitable for use as the reinforcement material or fibrillated component of the disclosure are capable of being fibrillated ("fibrillatable") during mixing with the matrix polymer, the filler, or both simultaneously. "Fibrillation" is a term of art that refers to the treatment of reinforcement materials (e.g., fluoropolymers) so as to produce, for example, a "node and fibril," network, or cage-like structure.

In one embodiment, the reinforcement material ( fluoropolymer, UHMW-PE) comprises fibrils having an average diameter of 5 nanometers (nm) to 2 micrometers ($\mu$m), or from about 5 nm to about 2 $\mu$m. The fibril may also have an average fibril diameter of 30 nanometers to 750 nanometers, more specifically 5 nanometers to 500 nanometers. In a further example, the reinforcement material may also have an average fibril diameter of about 30 nanometers to about 750 nanometers, more specifically about 5 nanometers to about 500 nanometers. Field Emission Scanning Electron Microscopy, TEM, SEM, AFM, and STEM are all exemplary techniques for observing the extent of fibrillation of the reinforcement material throughout the matrix polymer in the fibrillated compositions.

Suitable fluoropolymers are described in, e.g., United States patent 7,557,154 and include but are not limited to homopolymers and copolymers that comprise structural units derived from one or more fluorinated alpha-olefin monomers, that is, an alpha-olefin monomer that includes at least one fluorine atom in place of a hydrogen atom. In one embodiment the fluoropolymer comprises structural units derived from two or more fluorinated alpha-olefin, for example tetrafluoroethylene, hexafluoroethylene, and the like. In another embodiment, the fluoropolymer comprises structural units derived from one or more fluorinated alpha-olefin monomers and one or more non-fluorinated monoethylenically unsaturated monomers that are copolymerizable with the fluorinated monomers, for example alpha-monoethylenically

unsaturated copolymerizable monomers such as ethylene, propylene, butene, acrylate monomers (e.g., methyl methacrylate and butyl acrylate), vinyl ethers, (e.g., cyclohexyl vinyl ether, ethyl vinyl ether, n-butyl vinyl ether, vinyl esters) and the like. Specific examples of fluoropolymers include polytetrafluoroethylene, polyhexafluoropropylene, polyvinylidene fluoride, polychlorotrifluoroethylene, ethylene tetrafluoroethylene, fluorinated ethylene-propylene, polyvinyl fluoride, and ethylene chlorotrifluoroethylene. Combinations comprising at least one of the foregoing fluoropolymers may also be used. Polytetrafluroroethylene (PTFE) is considered especially suitable.

As is known, fluoropolymers are available in a variety of forms, including powders, emulsions, dispersions, agglomerations, and the like. "Dispersion" (also called "emulsion") fluoropolymers are generally manufactured by dispersion or emulsion, and may comprise 25 to 60 weight percent (wt. %), or about 25 wt. % to 60 wt. %, fluoropolymer in water, stabilized with a surfactant, wherein the fluoropolymer particles are 0.1 to 0.3 micrometers (microns, $\mu$m), or about 0.1 $\mu$m to about 0.3 $\mu$m in diameter. "Fine powder" (or "coagulated dispersion") fluoropolymers may be made by coagulation and drying of dispersion-manufactured fluoropolymers. Fine powder fluoropolymers are generally manufactured to have a particle size of 400 to 500 $\mu$m, or about 400 $\mu$m to about 500 $\mu$m. "Granular" fluoropolymers may be made by a suspension method, and are generally manufactured in two different particle size ranges, including a median particle size of 30 to 40 $\mu$m, or about 30 $\mu$m to about 40 $\mu$m and a high bulk density product exhibiting a median particle size of 400 to 500 $\mu$m, or about 400 $\mu$m to about 500 $\mu$m. Pellets of fluoropolymer may also be obtained and cryogenically ground to exhibit the desired particle size.

A fluoropolymer may be at least partially encapsulated by an encapsulating polymer that may be the same as or different from the matrix polymer (hereinafter referred to as an "encapsulated polymer"). Without being bound by theory, it is believed that encapsulation may aid in the distribution of the fluoropolymer within the matrix, and/or compatibilize the fluoropolymer with the matrix.

Suitable encapsulating polymers accordingly include, but are not limited to, vinyl polymers, acrylic polymers, polyacrylonitrile, polystyrenes, polyolefins, polyesters, polyurethanes, polyamides, polysulfones, polyimides, polyetherimides, polyphenylene ethers, polyphenylene sulfides, polyether ketones, polyether ether ketones, acrylonitrile butadiene styrene (ABS) resins, polyethersulfones, poly(alkenylaromatic) polymers, polybutadiene, liquid crystalline polymers, polyacetals, polycarbonates, polyphenylene ethers, ethylene-vinyl acetate copolymers, polyvinyl acetate, liquid crystal polymers, ethylene-tetrafluoroethylene copolymer, aromatic polyesters, polyvinyl fluoride, polyvinylidene fluoride, polyvinylidene chloride, and combinations comprising at least one of the foregoing polymers.

The encapsulating polymers may be obtained by polymerization of monomers or mixtures of monomers by methods known in the art, for example, condensation, addition polymerization, and the like. Emulsion polymerization, particularly radical polymerization may be used effectively. In one embodiment, the encapsulating polymer is formed from monovinylaromatic monomers containing condensed aromatic ring structures, such as vinyl naphthalene, vinyl anthracene and the like. Examples of suitable monovinylaromatic monomers include styrene, 3-methylstyrene, 3,5-diethylstyrene, 4-n-propylstyrene, alpha-methylstyrene, alpha-methyl vinyltoluene, alpha-chlorostyrene, alpha-bromostyrene, dichlorostyrene, dibromostyrene, tetra-chlorostyrene, and the like, and combinations comprising at least one of the foregoing compounds. Styrene and/or alpha-methylstyrene may be specifically mentioned. Other useful monomers for the formation of the encapsulating polymer include monovinylic monomers such as itaconic acid, acrylamide, N-substituted acrylamide or methacrylamide, maleic anhydride, maleimide, N-alkyl-, aryl-, or haloaryl-substituted maleimide, and glycidyl (meth)acrylates. Other monomers include acrylonitrile, ethacrylonitrile, methacrylonitrile, alphachloroacrylonitrile, beta-chloroacrylonitrile, alpha-bromoacrylonitrile, acrylic acid, methyl (meth)acrylate, ethyl (meth)acrylate, n-butyl (meth)acrylate, t-butyl (meth)acrylate, n-propyl (meth)acrylate, isopropyl (meth)acrylate, 2-ethylhexyl (meth)acrylate, and the like, and combinations comprising at least one of the foregoing monomers.

Mixtures of the foregoing monovinylaromatic monomers and monovinylic monomers may also be used, for example mixtures of styrene and acrylonitrile (SAN). The relative ratio of monovinylaromatic and monovinylic monomers in the rigid graft phase may vary widely depending on the type of fluoropolymer, type of monovinylaromatic and monovinylic monomer(s), and the desired properties of the encapsulant. The encapsulant may generally be formed from up to 100 wt. %, or up to about 100 wt. %, of monovinyl aromatic monomer, specifically 30 to 100 wt. %, more specifically 50 to 90 wt. % monovinylaromatic monomer, with the balance being comonomer(s). In further examples, the encapsulant may generally be formed from up to about 100 wt. % of monovinyl aromatic monomer, specifically about 30 to about 100 wt. %, more specifically about 50 to about 90 wt. % monovinylaromatic monomer, with the balance being comonomer(s).

Elastomers may also be used as the encapsulating polymer, as well as elastomer-modified graft copolymers. Suitable elastomers include, for example, conjugated diene rubbers; copolymers of a conjugated diene with less than 50 wt. %, or less than about 50 wt. %, of a copolymerizable monomer; olefin rubbers such as ethylene propylene copolymers (EPR) or ethylene-propylene-diene monomer rubbers (EPDM); ethylene-vinyl acetate rubbers; silicone rubbers; elastomeric C1-8 alkyl (meth)acrylates; elastomeric copolymers of C1-8 alkyl (meth)acrylates with butadiene and/or styrene; or combinations comprising at least one of the foregoing elastomers.

Examples of conjugated diene monomers that may be used are butadiene, isoprene, 1,3-heptadiene, methyl-1,3-pentadiene, 2,3-dimethyl-1,3-butadiene, 2-ethyl-1,3-pentadiene; 1,3- and 2,4-hexadienes, and the like, as well as

mixtures comprising at least one of the foregoing conjugated diene monomers. Specific conjugated diene homopolymers include polybutadiene and polyisoprene.

Copolymers of conjugated diene rubbers may also be used, for example those produced by aqueous radical emulsion polymerization of a conjugated diene and up to 10 wt. %, or up to about 10 wt. %, of one or more monomers copolymerizable therewith.

(Meth)acrylate monomers suitable for use as an elastomeric encapsulating monomer include the cross-linked, particulate emulsion homopolymers or copolymers of C4-8 alkyl (meth)acrylates, in particular C4-6 alkyl acrylates, for example n-butyl acrylate, t-butyl acrylate, n-propyl acrylate, isopropyl acrylate, 2-ethylhexyl acrylate, and the like, and combinations comprising at least one of the foregoing monomers. Exemplary comonomers include but are not limited to butadiene, isoprene, styrene, methyl methacrylate, phenyl methacrylate, phenylethyl methacrylate, N-cyclohexylacrylamide, vinyl methyl ether or acrylonitrile, and mixtures comprising at least one of the foregoing comonomers. Optionally, up to 5 wt. % of a polyfunctional crosslinking comonomer may be present, for example divinylbenzene, alkylenediol di(meth)acrylates such as glycol bisacrylate, alkylenetriol tri(meth)acrylates, polyester di(meth)acrylates, bisacrylamides, triallyl cyanurate, triallyl isocyanurate, allyl (meth)acrylate, diallyl maleate, diallyl fumarate, diallyl adipate, triallyl esters of citric acid, triallyl esters of phosphoric acid, and the like, as well as combinations comprising at least one of the foregoing crosslinking agents.

Suitable elastomer-modified graft copolymers may be prepared by first providing an elastomeric polymer (for example, as described above), then polymerizing the constituent monomer(s) of the rigid phase in the presence of the fluoropolymer and the elastomer to obtain the graft copolymer. The elastomeric phase may provide 5 to 95 wt. % of the total graft copolymer, more specifically 20 to 90 wt. %, and even more specifically 40 to 85 wt. % of the elastomer-modified graft copolymer, the remainder being the rigid graft phase. In further examples, the elastomeric phase may provide about 5 to about 95 wt. % of the total graft copolymer, more specifically about 20 to about 90 wt. %, and even more specifically about 40 to about 85 wt. % of the elastomer-modified graft copolymer, the remainder being the rigid graft phase. Depending on the amount of elastomer-modified polymer present, a separate matrix or continuous phase of ungrafted rigid polymer or copolymer may be simultaneously obtained along with the elastomer-modified graft copolymer.

Specific encapsulating polymers include polystyrene, copolymers of polystyrene, poly(alpha-methylstyrene), poly(alpha-ethylstyrene), poly(alpha-propylstyrene), poly(alpha-butylstyrene), poly(p-methylstyrene), polyacrylonitrile, polymethacrylonitrile, poly(methyl acrylate), poly(ethyl acrylate), poly(propyl acrylate), and poly(butyl acrylate), poly(methyl methacrylate), poly(ethyl methacrylate), poly(propyl methacrylate), poly(butyl methacrylate); polybutadiene, copolymers of polybutadiene with propylene, poly(vinyl acetate), poly(vinyl chloride), poly(vinylidene chloride), poly(vinylidene fluoride), poly(vinyl alcohols), acrylonitrile-butadiene copolymer rubber, acrylonitrile-butadiene-styrene (ABS), poly(C4-8 alkyl acrylate) rubbers, styrene-butadiene rubbers (SBR), EPDM rubbers, silicon rubber and combinations comprising at least one of the foregoing encapsulating polymers. A preferred fluoropolymer is polytetrafluoroethylene.

Preferably, the encapsulating polymer comprises a styrene-acrylonitrile copolymer, an acrylonitrile-butadiene-styrene copolymer, alpha-alkyl-styrene-acrylonitrile copolymer, an alpha-methylstyrene-acrylonitrile copolymer, a styrene-butadiene rubber, a methyl methacrylate copolymer, or a combination thereof. In another embodiment, the encapsulating polymer comprises SAN, ABS copolymers, alpha-(C1-3)alkyl-styrene-acrylonitrile copolymers, alpha-methylstyrene-acrylonitrile (AMSAN) copolymers, SBR, and combinations comprising at least one of the foregoing. In yet another embodiment the encapsulating polymer is SAN or AMSAN. A preferred fluoropolymer encapsulated by an encapsulating polymer is styrene acrylonitrile encapsulated polytetrafluoroethylene.

Suitable amounts amount of encapsulating polymer may be determined by one of ordinary skill in the art without undue experimentation, using the guidance provided herein. In one embodiment, the encapsulated fluoropolymer comprises 10 to 90 weight percent (wt. %), or about 10 to about 90 wt. %, fluoropolymer and 90 to 10 wt. %, or about 90 wt. % to about 10 wt. %, of the encapsulating polymer, based on the total weight of the encapsulated fluoropolymer. Alternatively, the encapsulated fluoropolymer comprises 20 to 80 wt. %, or about 20 to about 80 wt. %, more specifically 40 wt. % to 60 wt. %, or about 40 to about 60 wt. % fluoropolymer, and 80 wt. % to 20 wt. %, or about 80 to about 20 wt. %, specifically, 60 wt. % or 40 wt. %, or about 60 about 40 wt. % encapsulating polymer, based on the total weight of the encapsulated polymer.

## Additives

The disclosed compositions may include one or more other additives may be present in the compositions described herein, as desired. Exemplary additives include: one or more polymers, ultraviolet agents, ultraviolet stabilizers, heat stabilizers, antistatic agents, antimicrobial agents, radiation stabilizers, pigments, dyes, fillers, plasticizers, flame retardants, antioxidants, lubricants, and combinations thereof.

Exemplary polymers that can be mixed with the compositions described herein include elastomers, thermoplastics, thermoplastic elastomers, and impact additives. The compositions described herein may be mixed with other

polymers such as a polyester, a polyestercarbonate, a bisphenol-A homopolycarbonate, a polycarbonate copolymer, a tetrabromo-bisphenol A polycarbonate copolymer, a polysiloxane-co-bisphenol-A polycarbonate, a polyesteramide, a polyether, a polyepoxide, a polylactide, a polylactic acid (PLA), an acrylic polymer, polyacrylonitrile, a polystyrene, a polyolefin, a polysiloxane, a polyurethane, a polyamide, a polyamideimide, a polysulfone, a polyphenylene ether, an acrylonitrile-butadiene-styrene (ABS) resin, an acrylic-styrene-acrylonitrile (ASA) resin, a poly(alkenylaromatic) polymer, a polybutadiene, a polyacetal, a polycarbonate, an ethylene-vinyl acetate copolymer, a polyvinyl acetate, a liquid crystal polymer, an ethylene-tetrafluoroethylene copolymer, an aromatic polyester, a polyvinyl fluoride, a polyvinylidene fluoride, a polyvinylidene chloride, tetrafluoroethylene, or any combination thereof.

The additional polymer can be an impact modifier, if desired. Suitable impact modifiers may be high molecular weight elastomeric materials derived from olefins, monovinyl aromatic monomers, acrylic and methacrylic acids and their ester derivatives, as well as conjugated dienes that are fully or partially hydrogenated. The elastomeric materials can be in the form of homopolymers or copolymers, including random, block, radial block, graft, and coreshell copolymers.

A specific type of impact modifier may be an elastomer-modified graft copolymer comprising (i) an elastomeric (i.e., rubbery) polymer substrate having a Tg less than 10 °C, or less than about 10 °C, less than 0 °C or less than about 0 °C, less than -10 °C or less than about -10 °C, or between -40 °C to -80 °C or between about -40 °C to -80 °C, and (ii) a rigid polymer grafted to the elastomeric polymer substrate. Materials suitable for use as the elastomeric phase include, for example, conjugated diene rubbers, for example polybutadiene and polyisoprene; copolymers of a conjugated diene with less than about 50 wt. % of a copolymerizable monomer, for example a monovinylic compound such as styrene, acrylonitrile, n-butyl acrylate, or ethyl acrylate; olefin rubbers such as ethylene propylene copolymers (EPR) or ethylene-propylene-diene monomer rubbers (EPDM); ethylene-vinyl acetate rubbers; silicone rubbers; elastomeric $C_1$-$C_8$ alkyl(meth)acrylates; elastomeric copolymers of $C_1$-$C_8$ alkyl(meth)acrylates with butadiene and/or styrene; or combinations comprising at least one of the foregoing elastomers. Materials suitable for use as the rigid phase include, for example, monovinyl aromatic monomers such as styrene and alpha-methyl styrene, and monovinylic monomers such as acrylonitrile, acrylic acid, methacrylic acid, and the $C_1$-$C_6$ esters of acrylic acid and methacrylic acid, specifically methyl methacrylate.

Specific impact modifiers include styrene-butadiene-styrene (SBS), styrene-butadiene rubber (SBR), styrene-ethylene-butadiene-styrene (SEBS), ABS (acrylonitrile-butadiene-styrene), acrylonitrile-ethylene-propylene-diene-styrene (AES), styrene-isoprene-styrene (SIS), methyl methacrylate-butadiene-styrene (MBS), and styrene-acrylonitrile (SAN). Exemplary elastomer-modified graft copolymers include those formed from styrene-butadiene-styrene (SBS), styrene-butadiene rubber (SBR), styrene-ethylene-butadiene-styrene (SEBS), ABS (acrylonitrile-butadiene-styrene), acrylonitrile-ethylene-propylene-diene-styrene (AES), styrene-isoprene-styrene (SIS), methyl methacrylate-butadiene-styrene (MBS), and styrene-acrylonitrile (SAN).

The compositions described herein may comprise an ultraviolet (UV) stabilizer for dispersing UV radiation energy. The UV stabilizer does not substantially hinder or prevent cross-linking of the various components of the compositions described herein. UV stabilizers may be hydroxybenzophenones; hydroxyphenyl benzotriazoles; cyanoacrylates; oxanilides; or hydroxyphenyl triazines. Specific UV stabilizers include poly[(6-morphilino-s-triazine-2,4-diyl)[2,2,6,6-tetramethyl-4-piperidyl) imino]-hexamethylene [(2,2,6,6-tetramethyl-4-piperidyl)imino], 2-hydroxy-4-octyloxybenzophenone (Uvinul ™ 3008); 6-tert-butyl-2-(5-chloro-2H-benzotriazole-2-yl)-4-methylphenyl (Uvinul™ 3026); 2,4-di-tert-butyl-6-(5-chloro-2H-benzotriazole-2-yl)-phenol (Uvinul ™ 3027); 2-(2H-benzotriazole-2-yl)-4,6-di-tert-pentylphenol (Uvinul™ 3028); 2-(2H-benzotriazole-2-yl)-4-(1,1,3,3-tetramethylbutyl)-phenol (Uvinul™ 3029); 1,3-bis[(2'-cyano-3',3'-diphenylacryloyl)oxy]-2,2-bis-{[(2'-cyano-3',3'-diphenylacryloyl)oxy]methyl}-propane (Uvinul ™ 3030); 2-(2H-benzotriazole-2-yl)-4-methylphenol (Uvinul ™ 3033); 2-(2H-benzotriazole-2-yl)-4,6-bis(1-methyl-1-phenyethyl) phenol (Uvinul ™ 3034); ethyl-2-cyano-3,3-diphenylacrylate (Uvinul ™ 3035); (2-ethylhexyl)-2-cyano-3,3-diphenylacrylate (Uvinul ™ 3039); N,N'-bisformyl-N,N'-bis (2,2,6,6-tetramethyl-4-piperidinyl)hexamethylenediamine (Uvinul ™ 4050H); bis-(2,2,6,6-tetramethyl-4-pipieridyl)-sebacate (Uvinul ™ 4077H); bis-(1,2,2,6,6-pentamethyl-4-piperdiyl)-sebacate + methyl-(1,2,2,6,6-pentamethyl-4-piperidyl)-sebacate (Uvinul ™ 4092H); or combinations thereof. Other UV stabilizers include Cyasorb 5411, Cyasorb UV-3638, Uvinul 3030, and/or Tinuvin 234.

The compositions described herein may comprise heat stabilizers. Exemplary heat stabilizer additives include, for example, organophosphites such as triphenyl phosphite, tris-(2,6-dimethylphenyl)phosphite, tris-(mixed mono-and di-nonylphenyl)phosphite, or the like; phosphonates such as dimethylbenzene phosphonate or the like; phosphates such as trimethyl phosphate, or the like; or combinations thereof.

The compositions described herein may comprise an antistatic agent. Examples of monomeric antistatic agents may include glycerol monostearate, glycerol distearate, glycerol tristearate, ethoxylated amines, primary, secondary and tertiary amines, ethoxylated alcohols, alkyl sulfates, alkylarylsulfates, alkylphosphates, alkylaminesulfates, alkyl sulfonate salts such as sodium stearyl sulfonate, sodium dodecylbenzenesulfonate or the like, quaternary ammonium salts, quaternary ammonium resins, imidazoline derivatives, sorbitan esters, ethanolamides, betaines, or the like, or combinations comprising at least one of the foregoing monomeric antistatic agents.

Exemplary polymeric antistatic agents may include certain polyesteramides polyether-polyamide (polyetheramide) block copolymers, polyetheresteramide block copolymers, polyetheresters, or polyurethanes, each containing polyalkylene glycol moieties polyalkylene oxide units such as polyethylene glycol, polypropylene glycol, polytetramethylene glycol, and the like. Such polymeric antistatic agents are commercially available, for example PELESTAT™ 6321 (Sanyo) or PEBAX™ MH1657 (Atofina), IRGASTAT™ P18 and P22 (Ciba-Geigy). Other polymeric materials may be used as antistatic agents are inherently conducting polymers such as polyaniline (commercially available as PANIPOL™ EB from Panipol), polypyrrole and polythiophene (commercially available from Bayer), which retain some of their intrinsic conductivity after melt processing at elevated temperatures. Carbon fibers, carbon nanofibers, carbon nanotubes, carbon black, or a combination comprising at least one of the foregoing may be included to render the compositions described herein electrostatically dissipative.

The compositions described herein may comprise a radiation stabilizer, such as a gamma-radiation stabilizer. Exemplary gamma-radiation stabilizers include alkylene polyols such as ethylene glycol, propylene glycol, 1,3-propanediol, 1,2-butanediol, 1,4-butanediol, meso-2,3-butanediol, 1,2-pentanediol, 2,3-pentanediol, 1,4-pentanediol, 1,4-hexandiol, and the like; cycloalkylene polyols such as 1,2-cyclopentanediol, 1,2-cyclohexanediol, and the like; branched alkylenepolyols such as 2,3-dimethyl-2,3-butanediol (pinacol), and the like, as well as alkoxy-substituted cyclic or acyclic alkanes. Unsaturated alkenols are also useful, examples of which include 4-methyl-4-penten-2-ol, 3-methyl-pentene-3-ol, 2-methyl-4-penten-2-ol, 2,4-dimethyl-4-penten-2-ol, and 9 to decen-1-ol, as well as tertiary alcohols that have at least one hydroxy substituted tertiary carbon, for example 2-methyl-2,4-pentanediol (hexylene glycol), 2-phenyl-2-butanol, 3-hydroxy-3-methyl-2-butanone, 2-phenyl-2-butanol, and the like, and cyclic tertiary alcohols such as 1-hydroxy-1-methyl-cyclohexane. Certain hydroxymethyl aromatic compounds that have hydroxy substitution on a saturated carbon attached to an unsaturated carbon in an aromatic ring can also be used. The hydroxy-substituted saturated carbon can be a methylol group ($-CH_2OH$) or it can be a member of a more complex hydrocarbon group such as $-CR^{24}HOH$ or $-CR^{24}{}_2OH$ wherein $R^{24}$ is a complex or a simple hydrocarbon. Specific hydroxy methyl aromatic compounds include benzhydrol, 1,3-benzenedimethanol, benzyl alcohol, 4-benzyloxy benzyl alcohol and benzyl alcohol. 2-Methyl-2,4-pentanediol, polyethylene glycol, and polypropylene glycol are often used for gamma-radiation stabilization.

The term "pigments" means colored particles that are insoluble in the resulting compositions described herein. Exemplary pigments include titanium oxide, carbon black, carbon nanotubes, metal particles, silica, metal oxides, metal sulfides or any other mineral pigment; phthalocyanines, anthraquinones, quinacridones, dioxazines, azo pigments or any other organic pigment, natural pigments (madder, indigo, crimson, cochineal, etc.) and mixtures of pigments. The pigments may represent from 0.05 % to 15 %, or from about 0.05% to about 15%, by weight relative to the weight of the overall composition. The choice of pigments may depend on the composition of particular fibers being used for a given application.

The term "dye" refers to molecules that are soluble in the compositions described herein and that have the capacity of absorbing part of the visible radiation.

Pigments, dyes or fibers capable of absorbing radiation may be used to ensure the heating of an article based on the compositions described herein when heated using a radiation source such as a laser, or by the Joule effect, by induction or by microwaves. Such heating may allow the use of a process for manufacturing, transforming, or recycling an article made of the compositions described herein.

Suitable fillers for the compositions described herein include: silica, clays, calcium carbonate, carbon black, kaolin, and whiskers. Other possible fillers include, for example, silicates and silica powders such as aluminum silicate (mullite), synthetic calcium silicate, zirconium silicate, fused silica, crystalline silica graphite, natural silica sand, or the like; boron powders such as boron-nitride powder, boron-silicate powders, or the like; oxides such as $TiO_2$, aluminum oxide, magnesium oxide, or the like; calcium sulfate (as its anhydride, dihydrate or trihydrate); calcium carbonates such as chalk, limestone, marble, synthetic precipitated calcium carbonates, or the like; talc, including fibrous, modular, needle shaped, lamellar talc, or the like; wollastonite; surface-treated wollastonite; glass spheres such as hollow and solid glass spheres, silicate spheres, cenospheres, aluminosilicate (armospheres), or the like; kaolin, including hard kaolin, soft kaolin, calcined kaolin, kaolin comprising various coatings known in the art to facilitate compatibility with the polymeric matrix, or the like; single crystal fibers or "whiskers" such as silicon carbide, alumina, boron carbide, iron, nickel, copper, or the like; fibers (including continuous and chopped fibers) such as asbestos, carbon fibers, glass fibers, such as E, A, C, ECR, R, S, D, or NE glasses, or the like; sulfides such as molybdenum sulfide, zinc sulfide or the like; barium compounds such as barium titanate, barium ferrite, barium sulfate, heavy spar, or the like; metals and metal oxides such as particulate or fibrous aluminum, bronze, zinc, copper and nickel or the like; flaked fillers such as glass flakes, flaked silicon carbide, aluminum diboride, aluminum flakes, steel flakes or the like; fibrous fillers, for example short inorganic fibers such as those derived from blends comprising at least one of aluminum silicates, aluminum oxides, magnesium oxides, and calcium sulfate hemihydrate or the like; natural fillers and reinforcements, such as wood flour obtained by pulverizing wood, fibrous products such as cellulose, cotton, sisal, jute, starch, cork flour, lignin, ground nut shells, corn, rice grain husks or the like; organic fillers such as polytetrafluoroethylene; reinforcing organic fibrous fillers formed from organic polymers capable of forming fibers such as poly(ether ketone), polyimide, polybenzoxazole, poly(phenylene sulfide), polyesters, polyethylene, aromatic polyamides, aromatic polyimides, polyetherimides, polytetrafluoroethylene,

acrylic resins, poly(vinyl alcohol) or the like; as well as additional fillers and reinforcing agents such as mica, clay, feldspar, flue dust, fillite, quartz, quartzite, perlite, tripoli, diatomaceous earth, carbon black, or the like, or combinations comprising at least one of the foregoing fillers or reinforcing agents. The choice of filler may be influenced by the materials of the fiber, and not all filler may be optimal for all applications.

Plasticizers, lubricants, and mold release agents can be included. Mold release agent (MRA) will allow the material to be removed quickly and effectively. Mold releases can reduce cycle times, defects, and browning of finished product. There is considerable overlap among these types of materials, which may include, for example, phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol-A; polyalpha-olefins; epoxidized soybean oil; silicones, including silicone oils; esters, for example, fatty acid esters such as alkyl stearyl esters, e.g., methyl stearate, stearyl stearate, pentaerythritol tetrastearate (PETS), and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination comprising at least one of the foregoing glycol polymers, i.e., methyl stearate and polyethylene-polypropylene glycol copolymer in a suitable solvent; waxes such as beeswax, montan wax, paraffin wax, or the like.

Various types of flame retardants can be utilized as additives. In one embodiment, the flame retardant additives include, for example, flame retardant salts such as alkali metal salts of perfluorinated $C_1$-$C_{16}$ alkyl sulfonates such as potassium perfluorobutane sulfonate (Rimar salt), potassium perfluoroctane sulfonate, tetraethylammonium perfluorohexane sulfonate, potassium diphenylsulfone sulfonate (KSS), and the like, sodium benzene sulfonate, sodium toluene sulfonate (NATS) and the like; and salts formed by reacting for example an alkali metal or alkaline earth metal (for example lithium, sodium, potassium, magnesium, calcium and barium salts) and an inorganic acid complex salt, for example, an oxoanion, such as alkali metal and alkaline-earth metal salts of carbonic acid, such as $Na_2CO_3$, $K_2CO_3$, $MgCO_3$, $CaCO_3$, and $BaCO_3$ or fluoro-anion complex such as $Li_3AlF_6$, $BaSiF_6$, $KBF_4$, $K_3AlF_6$, $KAlF_4$, $K_2SiF_6$, and/or $Na_3AlF_6$ or the like. Rimar salt and KSS and NATS, alone or in combination with other flame retardants, are particularly useful in the compositions disclosed herein. In certain embodiments, the flame retardant does not contain bromine or chlorine.

The flame retardant additives may include organic compounds that include phosphorus, bromine, and/or chlorine. In certain embodiments, the flame retardant is not a bromine or chlorine containing composition. Non-brominated and non-chlorinated phosphorus-containing flame retardants can include, for example, organic phosphates and organic compounds containing phosphorus-nitrogen bonds. Exemplary di- or polyfunctional aromatic phosphorus-containing compounds include resorcinol tetraphenyl diphosphate (RDP), the bis(diphenyl) phosphate of hydroquinone and the bis(diphenyl) phosphate of bisphenol-A, respectively, their oligomeric and polymeric counterparts, and the like. Other exemplary phosphorus-containing flame retardant additives include phosphonitrilic chloride, phosphorus ester amides, phosphoric acid amides, phosphonic acid amides, phosphinic acid amides, tris(aziridinyl) phosphine oxide, polyorganophosphazenes, and polyorganophosphonates.

Some suitable polymeric or oligomeric flame retardants include: 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; 2,2-bis-(2,6-dichlorophenyl)-pentane; 2,2-bis-(3,5-dibromophenyl)-hexane; bis-(4-chlorophenyl)-phenyl-methane; bis-(3,5-dichlorophenyl)-cyclohexylmethane; bis-(3-nitro-4-bromophenyl)-methane; bis-(4-hydroxy-2,6-dichloro-3-methoxyphenyl)-methane; 2,2-bis-(3,5-dichloro-4-hydroxyphenyl)-propane; and 2,2-bis-(3-bromo-4-hydroxyphenyl)-propane. Other flame retardants include: 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromo diphenyl oxide, and the like.

The flame retardant optionally is a non-halogen based metal salt, e.g., of a monomeric or polymeric aromatic sulfonate or mixture thereof. The metal salt is, for example, an alkali metal or alkali earth metal salt or mixed metal salt. The metals of these groups include sodium, lithium, potassium, rubidium, cesium, beryllium, magnesium, calcium, strontium, francium and barium. Examples of flame retardants include cesium benzenesulfonate and cesium p-toluenesulfonate. See e.g., US 3,933,734, EP 2103654, and US2010/0069543A1.

Another useful class of flame retardant is the class of cyclic siloxanes having the general formula $[(R)_2SiO]_y$ wherein R is a monovalent hydrocarbon or fluorinated hydrocarbon having from 1 to 18 carbon atoms and y is a number from 3 to 12. Examples of fluorinated hydrocarbon include, but are not limited to, 3-fluoropropyl, 3,3,3-trifluoropropyl, 5,5,5,4,4,3,3-heptafluoropentyl, fluorophenyl, difluorophenyl and trifluorotolyl. Examples of suitable cyclic siloxanes include, but are not limited to, octamethylcyclotetrasiloxane, 1,2,3,4-tetramethyl-1,2,3,4-tetravinylcyclotetrasiloxane, 1,2,3,4-tetramethyl-1,2,3,4-tetraphenylcyclotetrasiloxane, octaethylcyclotetrasiloxane, octapropylcyclotetrasiloxane, octabutylcyclotetrasiloxane, decamethylcyclopentasiloxane, dodecamethylcyclohexasiloxane, tetradecamethylcycloheptasiloxane, hexadecamethylcyclooctasiloxane, eicosamethylcyclodecasiloxane, octaphenylcyclotetrasiloxane, and the like. A particularly useful cyclic siloxane is octaphenylcyclotetrasiloxane.

Exemplary antioxidant additives include organophosphites such as tris(nonyl phenyl)phosphite, tris(2,4-di-t-butylphenyl)phosphite ("IRGAFOS 168" or "I-168"), bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations comprising at least one of the foregoing antioxidants.

As described, the disclosed compositions may include PTFE, which has antidrop properties. The disclosed compositions may include additional anti-drip agent, depending on the user’s needs.

The thermoplastic matrix polymer, the plurality of fibrillated reinforcement material regions, or both, may, in some embodiments, be oriented. By "oriented" is meant an element sharing an alignment (or nearly sharing an alignment) with another element. As one example, an element (e.g., a fibril) may have a major axis that is within about, e.g., 20 degrees of parallel to the corresponding major axis of another fibril. As another example, a region may comprise a plurality of oriented fibrils, the fibrils all having major axes that are aligned to within about 20 degrees of a particular line in space. It should be understood that in some embodiments, the fibrils are not oriented relative to one another and may, in some embodiments, be essentially randomly oriented.

A fiber may have a diameter in the range of from about 2 micrometers to about 4 mm, e.g., from about 2 micrometers to about 200 micrometers, from about 0.1 mm to about 4 mm, and all intermediate values. The length of a fiber according to the present disclosure may be according to the needs of the user. A fiber may have a length of, e.g., 1-100 mm and all intermediate values. A fiber may have a diameter in the range of about 2 to about 200 micrometers, depending on the user’s needs.

It should be understood that a fiber may be circular in cross-section, but may also be rectangular, ovoid, polygonal, or otherwise shaped. Rectangular fibers may be termed "tapes," in some embodiments. Tapes according to the present disclosure may have a cross-sectional aspect ratio in the range of from about 1 to about 100, e.g., about 2 to about 90, about 3 to about 80, about 5 to about 75, about 10 to about 65, about 20 to about 50, about 30 to about 40 or even about 35. Aspect ratios of 1, 2, 3, 4, 5, 6, 7, 8, 9, and 10 are all considered suitable.

The methods include essentially any additive-manufacturing process that uses a fiber or filament as a build material, e.g., FFF. In these techniques, a single filament or a threaded spools of a thermoplastic filament is introduced into a heating chamber. The thermoplastic is melted and then exerted through a nozzle (the size and shape of which will vary according to the user’s needs and the application) onto a substrate, where the exerted thermoplastic solidifies. The nozzle may be moveable in one or more of the x, y, and z axes, and may also be rotatable. Similarly, the substrate (sometimes termed the "build surface" or platform) may also be moveable and/or rotatable. The relative motion of the nozzle and substrate (as well as the deposition of the thermoplastic) is suitably controlled by software. Additional background on these techniques may be found in United States Patent 5,121,329.

Although additive manufacturing techniques are known to those in the art, the present disclosure will provide some further background on such techniques for convenience.

Suitable additive manufacturing processes include other processes that use filaments, pellets, and the like, and suitable processes will be known to those of ordinary skill in the art; the disclosed compositions may be used in virtually any additive manufacturing process that uses filament or even pellet build material.

In exemplary additive manufacturing techniques, a plurality of layers is formed in a preset pattern by an additive manufacturing process. "Plurality" as used in the context of additive manufacturing includes 2 or more layers. The maximum number of layers can vary greatly, determined, for example, by considerations such as the size of the article being manufactured, the technique used, the capabilities of the equipment used, and the level of detail desired in the final article. For example, 20 to 100,000 layers can be formed, or 50 to 50,000 layers can be formed.

As used herein, "layer" is a term of convenience that includes any shape, regular or irregular, having at least a predetermined thickness. In some embodiments, the size and configuration of two dimensions are predetermined, and on some embodiments, the size and shape of all three dimensions of the layer is predetermined. The thickness of each layer can vary widely depending on the additive manufacturing method. In some embodiments the thickness of each layer as formed differs from a previous or subsequent layer. In some embodiments, the thickness of each layer is the same. In some embodiments, the thickness of each layer as formed is 0.5 millimeters (mm) to 5 mm. In other embodiments, the article is made from a monofilament additive manufacturing process. For example, the monofilament may comprise an thermoplastic polymer with a diameter of from 0.1 to 5.0 mm.

The preset pattern can be determined from a three-dimensional digital representation of the desired article as is known in the art and described in further detail below.

Any additive manufacturing process can be used, provided that the process allows formation of at least one layer of a thermoplastic material that is fusible to the next adjacent layer. The plurality of layers in the predetermined pattern are fused to provide the article. Any method effective to fuse the plurality of layers during additive manufacturing can be used. In some embodiments, the fusing occurs during formation of each of the layers. In some embodiments the fusing occurs while subsequent layers are formed, or after all layers are formed.

In some embodiments, an additive manufacturing technique known generally as material extrusion can be used. In material extrusion, an article can be formed by dispensing a material ("the build material", which may be rendered flowable) in a layer-by-layer manner and fusing the layers. "Fusing" as used herein includes the chemical or physical interlocking of the individual layers, and provides a "build structure." Flowable build material can be rendered flowable by dissolving or suspending the material in a solvent. In other embodiments, the flowable material can be rendered flowable by melting. In other embodiments, a flowable prepolymer composition that can be crosslinked or otherwise reacted to form a solid can be used. Fusing can be by removal of the solvent, cooling of the melted material, or reaction of the prepolymer composition.

In particular, an article can be formed from a three-dimensional digital representation of the article by depositing the flowable material as one or more roads on a substrate in an x-y plane to form the layer. The position of the dispenser (e.g., a nozzle) relative to the substrate is then incremented along a z-axis (perpendicular to the x-y plane), and the process is then repeated to form an article from the digital representation. The dispensed material is thus also referred to as a "modeling material" as well as a "build material." In some embodiments a support material as is known in the art can optionally be used to form a support structure. In these embodiments, the build material and the support material can be selectively dispensed during manufacture of the article to provide the article and a support structure. The support material can be present in the form of a support structure, for example, a scaffolding that can be mechanically removed or washed away when the layering process is completed to the desired degree. The dispenser may be movable in one, two, or three dimensions, and may also be rotatable. Similarly, the substrate may also be moveable in one, two, or three dimensions, and may also be rotatable.

Systems for material extrusion are known. One exemplary material extrusion additive manufacturing system includes a build chamber and a supply source for the thermoplastic material. The build chamber may include a build platform, a gantry, and a dispenser for dispensing the thermoplastic material, for example an extrusion head.

The build platform is a platform on which the article is built, and desirably moves along a vertical z-axis based on signals provided from a computer-operated controller. The gantry is a guide rail system that can be configured to move the dispenser in a horizontal x-y plane within the build chamber, for example based on signals provided from a controller. The horizontal x-y plane is a plane defined by an x-axis and a y-axis where the x-axis, the y-axis, and the z-axis are orthogonal to each other.

Alternatively, the platform can be configured to move in the horizontal x-y plane and the extrusion head can be configured to move along the z-axis. Other similar arrangements can also be used such that one or both of the platform and extrusion head are moveable relative to each other. The build platform can be isolated or exposed to atmospheric conditions. The distance between the platform and head may be adjustable, as may be the orientation of the head and platform relative to one another. It should be understood that the platform may be heated, cooled or maintained at ambient temperature, depending on the user's needs.

In some embodiments, both the build structure and the support structure of the article formed can include a fused expandable layer. In other embodiments, the build structured includes a fused expandable layer and the support material does not include an expandable layer. In still other embodiments, the build structure does not include an expandable layer and the support structure does include a fused expandable layer. In those embodiments where the support structure includes an expandable layer, the lower density of the expanded layer can allow for the support material to be easily or more easily broken off than the non-expanded layer, and re-used or discarded.

In some embodiments, the support structure can be made purposely breakable, to facilitate breakage where desired. For example, the support material can have an inherently lower tensile or impact strength than the build material. In other embodiments, the shape of the support structure can be designed to increase the breakability of the support structure relative to the build structure.

For example, in some embodiments, the build material can be made from a round print nozzle or round extrusion head. A round shape as used herein means any cross-sectional shape that is enclosed by one or more curved lines. A round shape includes circles, ovals, ellipses, and the like, as well as shapes having an irregular cross-sectional shape. Three-dimensional articles formed from round shaped layers of build material can possess strong structural strength. In other embodiments, the support material for the articles can be made from a non-round print nozzle or non-round extrusion head. A non-round shape means any cross-sectional shape enclosed by at least one straight line, optionally together with one or more curved lines. A non-round shape can include squares, rectangles, ribbons, horseshoes, stars, T head shapes, X shapes, chevrons, and the like. These non-round shapes can render the support material weaker,

brittle and with lower strength than round shaped build material.

The above material extrusion techniques include techniques such as fused deposition modeling and fused filament fabrication as well as others as described in ASTM F2792-12a. In fused material extrusion techniques, an article can be produced by heating a thermoplastic material to a flowable state that can be deposited to form a layer. The layer can have a predetermined shape in the x-y axis and a predetermined thickness in the z-axis. The flowable material can be deposited as roads as described above, or through a die to provide a specific profile. The layer cools and solidifies as it is deposited. A subsequent layer of melted thermoplastic material fuses to the previously deposited layer, and solidifies upon a drop in temperature. Extrusion of multiple subsequent layers builds the desired shape. In some embodiments at least one layer of an article is formed by melt deposition, and in other embodiments, more than 10, or more than 20, or more than 50 of the layers of an article are formed by melt deposition, up to and including all of the layers of an article being formed by melt deposition.

In some embodiments the thermoplastic polymer is supplied in a melted form to the dispenser. The dispenser can be configured as an extrusion head. The extrusion head can deposit the thermoplastic composition as an extruded material strand to build the article. Examples of average diameters for the extruded material strands can be from 1.27 millimeters (0.050 inches) to 3.0 millimeters (0.120 inches).

So-called large format additive manufacturing (LFAM) systems are also within the scope of the present disclosure, as such systems may utilize pellets of polymeric material according to the present disclosure to form parts.

In a LFAM system, a comparatively large extruder converts feed material to a molten form that is then deposited on a table. A LFAM system may comprise a frame or gantry that in turn includes a print head that is moveable in the x,y and/or z directions. Alternately, the print head may be stationary and the part (or the part support) is moveable in the x, y and/or z axes.

The print head may have a feed material in the form of pellets and/or filament and a deposition nozzle. The feed material may be stored in a hopper (for pellets) or other suitable storage vessel nearby to the print head or supplied from a filament spool.

An LFAM apparatus may comprise a nozzle for extruding a material. The polymeric material is heated and extruded through the nozzle and directly deposited on a building surface, which surface may be a moveable (or stationary) platform or may also be previously-deposited material. A heat source may be positioned on or in connection with the nozzle to heat the material to a desired temperature and/or flow rate. The bed may be heated or at room temperature.

In one non-limiting embodiment, a nozzle may be configured to extrude molten polymeric material (from melted pellets) at about 1 to about 50 kg/hr through a nozzle onto a print bed. The size of a print bed may vary depending on the needs of the user and can be room-sized. As one example, a print bed may be sized at about 400 x 200 x 86 inches (10.16 x 5.08 x 2.18 m). A LFAM apparatus may have one, two, or more heated zones.

One exemplary LFAM method is known as big area additive manufacturing (BAAM; e.g., Cincinnati Incorporated, http://www.e-ci.com/baam/). LFAM systems may utilize filaments, pellets, or both as feed materials. Exemplary description of a BAAM process may be found in, e.g., US2015/0183159, US2015/0183138, US2015/0183164, and US 8,951,303. The disclosed compositions are also suitable for droplet-based additive manufacturing systems, e.g., the Freeformer™ system by Arburg (https://www.arburg.com/us/us/products-and-services/additive-manufacturing/).

Additive manufacturing systems may use materials in filament form as the build material. Such a system may, as described, effect relative motion between the filament (and/or molten polycarbonate) and a substrate. By applying the molten material according to a pre-set schedule of locations, the system may construct an article in a layer-by-layer fashion, as is familiar to those of ordinary skill in the art. As described elsewhere herein, the build material may also be in pellet form.

The disclosed technology may include methods of forming a three-dimensional objects. These methods may include depositing a layer of thermoplastic material (e.g., a material according to the disclosed compositions) through a nozzle onto a platform to form a deposited layer. A user may then deposit subsequent layers onto the first deposited layer and repeat the preceding steps to form the three-dimensional object. A related apparatus for forming such three-dimensional objects may comprise a platform configured to support the three-dimensional object; an extrusion head arranged relative to the platform and configured to deposit a thermoplastic material in a preset pattern to form a layer of the three-dimensional object; and a controller configured to control the position of the extrusion head and the energy source relative to the platform. The vertical distance between the platform and the extrusion head is adjustable; the extrusion head may be moveable in one, two, or three dimensions and may also be rotatable. The foregoing description is illustrative only and does not necessarily limit the scope of the present disclosure or the appended claims.

In a particular embodiment, the thermoplastic matrix polymer comprises > 90.0 wt% of a polyalkylene terephthalate, with regard to the total weight of the thermoplastic matrix polymer. Preferably, the thermoplastic matrix polymer comprises > 95.0 wt%, more preferably > 98.0 wt%, of a polyalkylene terephthalate. Particularly preferably, the thermoplastic matrix polymer comprises a polyalkylene terephthalate as the only thermoplastic material. For example, the thermoplastic matrix polymer may consist of a polyalkylene terephthalate and optional additives.

The polyalkylene terephthalate may for example be a polyalkylene terephthalate selected from a polyethylene

terephthalate, polybutylene terephthalate, polycyclohexylmethylene terephthalate. Preferably, the polyalkylene terephthalate is polybutylene terephthalate.

Preferably, the thermoplastic matrix polymer comprises > 90.0 wt% of a polyalkylene terephthalate wherein the polyalkylene terephthalate is polybutylene terephthalate, with regard to the total weight of the thermoplastic matrix polymer. Preferably, the thermoplastic matrix polymer comprises > 95.0 wt%, more preferably > 98.0 wt%, of a polyalkylene terephthalate wherein the polyalkylene terephthalate is polybutylene terephthalate. Particularly preferably, the thermoplastic matrix polymer comprises a polyalkylene terephthalate as the only thermoplastic material, wherein the polyalkylene terephthalate is polybutylene terephthalate. For example, the thermoplastic matrix polymer may consist of a polyalkylene terephthalate and optional additives, wherein the polyalkylene terephthalate is polybutylene terephthalate.

In particular, the poly(butylene terephthalate) may be a homopolymer comprising polymeric units derived from 1,4-butanediol and terephthalic acid or a diester thereof, such as dimethyl terephthalate.

The polymeric units derived from 1,4-butanediol and terephthalic acid or a diester thereof, such as dimethyl terephthalate may for example be polymeric units according to the formula:

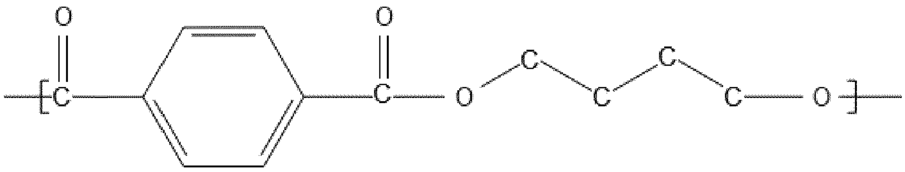

Alternatively, the poly(butylene terephthalate) may be a copolymer comprising ≥ 90 wt% with regard to the total weight of the poly(butylene terephthalate) of polymeric units derived from 1,4-butanediol and terephthalic acid or a diester thereof, such as dimethyl terephthalate.

In the case that the poly(butylene terephthalate) is a copolymer, it may for example comprise ≤ 10.0 wt% of polymer units derived from further monomers. Suitable further monomers may for example be selected from isophthalic acid, naphthalene dicarboxylic acid, ethanediol, 1,3-propanediol, cyclohexanedimethanol, or combinations thereof.

For example, the poly(butylene terephthalate) may comprise ≤ 10.0 wt% of polymeric units derived from further monomers, preferably ≤ 5.0 wt%, such as ≥ 0.5 and ≤ 5.0 wt%, with regard to the total weight of the poly(butylene terephthalate).

In a particular embodiment, the poly(butylene terephthalate) comprises polymeric units derived from 1,4-butanediol and terephthalic acid or dimethyl terephthalate, and further ≥ 0.5 and ≤ 5.0 wt% polymeric units derived from isophthalic acid.

It is preferred that the poly(butylene terephthalate) has an intrinsic viscosity of ≥ 0.50 and ≤ 2.00 dl/g, for example ≥ 0.70 and ≤ 1.30 dl/g, as determined in accordance with ASTM D2857-95 (2007).

The invention further also relates to a composite fiber comprising a thermoplastic matrix polymer, the composite fiber having a diameter in the range of from about 2 micrometers to about 4 millimeters, and the composite fiber comprising a plurality of fibrillated reinforcement material regions disposed within the thermoplastic matrix polymer, and the melting temperature or Tg of the thermoplastic matrix polymer, whichever is higher, being below the melting temperature or Tg, whichever is lower, of the fibrillated reinforcement material, wherein the thermoplastic matrix polymer is a polybutylene terephthalate.

Further, the invention also relates a composite fiber comprising a thermoplastic matrix polymer, the composite fiber having a diameter in the range of from about 2 micrometers to about 4 millimeters, and the composite fiber comprising a plurality of fibrillated reinforcement material regions disposed within the thermoplastic matrix polymer, and the melting temperature or Tg of the thermoplastic matrix polymer, whichever is higher, being below the melting temperature or Tg, whichever is lower, of the fibrillated reinforcement material, wherein the thermoplastic matrix polymer is a polybutylene terephthalate, wherein the fibrillated reinforcement material is polytetrafluorethylene. In the context of the present invention, $T_g$ may be understood as determined in accordance with ISO 11357-2 (2013). Particularly, the invention also relates to a composite fiber comprising a thermoplastic matrix polymer, the composite fiber having a diameter in the range of from about 2 micrometers to about 4 millimeters, and the composite fiber comprising a plurality of fibrillated reinforcement material regions disposed within the thermoplastic matrix polymer, wherein the thermoplastic matrix polymer is a polybutylene terephthalate, and wherein the fibrillated reinforcement material is polytetrafluorethylene.

In particular, the invention also encompasses an embodiment relating to a composite fiber comprising a thermoplastic matrix polymer, the composite fiber having a diameter in the range of from about 2 micrometers to about 4 millimeters, and the composite fiber comprising a plurality of fibrillated reinforcement material regions disposed within the thermoplastic matrix polymer, and the melting temperature or Tg of the thermoplastic matrix polymer, whichever is higher, being below the melting temperature or Tg, whichever is lower, of the fibrillated reinforcement material, wherein the thermoplastic matrix polymer is a polybutylene terephthalate, wherein the fibrillated reinforcement material is polytetrafluorethylene, wherein the composite fiber comprises 0.01 wt% to 15.0 wt%, preferably 0.25 wt% to 5.0 wt%, more preferably 0.50 wt% to 2.50 wt%, of the fibrillated reinforcement material, as measured against the total weight of the composite fiber.

Even further particularly, the invention also encompasses an embodiment relating to a composite fiber comprising a thermoplastic matrix polymer, the composite fiber having a diameter in the range of from about 2 micrometers to about 4 millimeters, and the composite fiber comprising a plurality of fibrillated reinforcement material regions disposed within the thermoplastic matrix polymer, and the melting temperature or Tg of the thermoplastic matrix polymer, whichever is higher, being below the melting temperature or Tg, whichever is lower, of the fibrillated reinforcement material, wherein the thermoplastic matrix polymer is a polybutylene terephthalate having an intrinsic viscosity of ≥ 0.50 and ≤ 2.00 dl/g, for example ≥ 0.70 and ≤ 1.30 dl/g, as determined in accordance with ASTM D2857-95 (2007), wherein the fibrillated reinforcement material is polytetrafluorethylene, wherein the composite fiber comprises 0.01 wt% to 15.0 wt%, preferably 0.25 wt% to 5.0 wt%, more preferably 0.50 wt% to 2.50 wt%, of the fibrillated reinforcement material, as measured against the total weight of the composite fiber.

In the context of the present invention, polytetrafluorethylene is also referred to as PTFE.

The fibrillated reinforcement material may be present in the composite fiber of the present invention in the form of a fibrillated reinforcement material encapsulated with a further thermoplastic material. For example, the fibrillated reinforcement material may be a polytetrafluorethylene encapsulated with a styrene-acrylonitrile copolymer. Such polytetrafluorethylene encapsulated with a styrene-acrylonitrile copolymer may also be referred to as TSAN. For example, the fibrillated reinforcement material may be a TSAN wherein the TSAN comprises 10-90 wt% of polytetrafluorethylene and 10-90 wt% of styrene-acrylonitrile copolymer, with regard to the total weight of the TSAN, preferably 20-80 wt% of polytetrafluorethylene and 20-80 wt% of styrene-acrylonitrile copolymer, more preferably 30-70 wt% of polytetrafluorethylene and 30-70 wt% of styrene-acrylonitrile copolymer, even more preferably 40-60 wt% of polytetrafluorethylene and 40-60 wt% of styrene-acrylonitrile copolymer.

Such fibrillated reinforcement material is understood to contribute to the degree of dispersion of the regions of fibrillated material in the thermoplastic matrix polymer, and thereby to contribute to the improvement of the mechanical properties and the melt processing properties of the material that forms the composite fiber.

The invention in a certain embodiment relates to a composite fiber having a diameter in the range of 2.0 μm to 4.0 mm, wherein the fiber comprises a thermoplastic matrix polymer, and a plurality of fibrillated reinforcement material regions disposed within the thermoplastic matrix polymer, wherein the melting temperature of the thermoplastic matrix polymer is lower than the melting temperature of the fibrillated reinforcement material.

For example, the thermoplastic matrix polymer is selected from a polyalkylene terephthalate, preferably a polyethylene terephthalate or a polybutylene terephthalate, a polyalkylene naphthalate, preferably a polyethylene naphthalate, a polyphenylene oxide, a polycarbonate, a polystyrene, a polyamide, a polyolefin, or a combination thereof. Preferably, the thermoplastic matrix polymer is selected from a polyalkylene terephthalate, preferably a polyethylene terephthalate or a polybutylene terephthalate, a polyalkylene naphthalate, preferably a polyethylene naphthalate, a polyphenylene oxide, a polycarbonate, a polystyrene, a polyamide, or a polyolefin.

Particularly, it is preferred that the thermoplastic matrix polymer is polybutylene terephthalate. The fibrillated reinforcement material is a thermoplastic material selected from an ultra-high molecular weight polyethylene (UHMWPE) or a polytetrafluorethylene (PTFE). The fibrillated reinforcement material is a thermoplastic material encapsulated in a further thermoplastic material. It is preferred that the melting temperature of the further thermoplastic material is lower than the melting temperature of the thermoplastic material.

The melting temperature of the further thermoplastic material is < 20°C, more preferably < 10°C, above the melting temperature of the thermoplastic matrix polymer. Even more particularly, it is preferred that the melting temperature of the further thermoplastic material is < 20°C, more preferably < 10°C, above the melting temperature of the thermoplastic matrix polymer, and the melting temperature of the fibrillated reinforcement material is > 30°C, preferably > 50°C, even more preferably > 70°C above the melting temperature of the thermoplastic matrix polymer.

In the context of the present invention, a UHMWPE is to be understood to be a polyethylene having a weight average molecular weight ($M_w$) of > 1000 kg/mol, preferably >1000 and <10000 kg/mol, as determined in accordance with ISO 11542-1 (2001).

In the context of the present invention, the melting temperature is the peak melt temperature $T_{p,m}$ as determined in accordance with ISO 11357-3 (2011), first heating run.

The invention will now be elucidated by the following non-limiting examples.

The following materials were used in the experiments according to the present invention:

| | |
|---|---|
| TSAN | A formulation comprising 50 wt% of PTFE of grade Algoflon DF210, obtainable from Solvay Solexis, in 50 wt% of a styrene-acrylontrile (SAN) copolymer |

(continued)

| | |
|---|---|
| PBT1 | SABIC Valox 315, a poly(butylene terephthalate) having an intrinsic viscosity of 1.10 dl/g, obtainable from SABIC |
| PBT2 | SABIC HX312C, a poly(butylene terephthalate) having an intrinsic viscosity of 0.92 dl/g, obtainable from SABIC |

The PFTE has a melting temperature of 326°C. The SAN has a melting temperature of 230°C. Both PBT1 and PBT2 have a melting temperature of 223°C.

Formulations of the above materials were compounded according to the following table:

| Example | TSAN | PBT1 | PBT2 |
|---|---|---|---|
| 1 | 0 | 100.0 | |
| 2 | 0.25 | 99.75 | |
| 3 | 0.50 | 99.50 | |
| 4 | 1.00 | 99.00 | |
| 5 | 2.00 | 98.00 | |
| 6 | 3.00 | 97.00 | |
| 7 | 5.00 | 95.00 | |
| 8 | 10.00 | 90.00 | |
| 9 | 2.00 | | 98.00 |

Wherein the numbers indicate the parts by weight of each of the materials used in the tested formulations. Example 1 was included for comparative purposes.

Compounding was performed by extruding a dry blend of the formulations of the above table using a 25mm twin screw extruder. The temperature of extrusion was 250°C (melt temperature), with a screw rpm of 200. Prior to extrusion the mixture was dried at 120°C for 4 hours. After compounding, the obtained material was cooled and shaped to pellets.

Of the compounded formulations according to examples 1-9, a number of parameters were tested as presented in the table below.

| | Example | | | | | | | | |
|---|---|---|---|---|---|---|---|---|---|
| | 1 | 2 | 3 | 4 | 5 | 6 | 7 | 8 | 9 |
| MVR | 16.0 | | | | 9.0 | | 3.5 | 2.0 | |
| $E_t$ | 2460 | 2500 | 2530 | 2720 | 2840 | 2910 | 3010 | 2960 | 2900 |
| $E_b$ | 45 | 46 | 48 | 58 | 49 | 47 | 38 | 12 | |
| $\sigma_y$ | 57.0 | 57.3 | 57.8 | 59.8 | 64.2 | 65.6 | 67.6 | 67.8 | 64.0 |
| $\varepsilon_y$ | 4.0 | | | | 5.0 | | | | 11.0 |
| Fatigue | 1800 | | | | 3700 | | | | |
| $\eta^*$ | 600 | | | | 3500 | | | | 2200 |
| $T_{p,m}$ | 223 | | | | 223 | | | | |
| Tp,c | 192 | | | | 200 | | | | |

Wherein:

- MVR is the melt volume flow rate, expressed in $cm^3$/10 min, determined in accordance with ISO 1133-1 (2011), at 250°C, using a load of 2.16 kg;

- $E_t$ is the modulus, expressed in MPa, determined in accordance with ISO 527-1 (2012);
- $\varepsilon_b$ is the strain or elongation at break, expressed in %, determined in accordance with ISO 527-1 (2012);
- $\sigma_y$ is the stress at yield, expressed in MPa, determined in accordance with ISO 527-1 (2012);
- $\varepsilon_y$ is the strain at yield, expressed in %, determined in accordance with ISO 527-1 (2012);
- Fatigue indicates the number of cycles according to ASTM D7791 (2017) that the samples could withstand prior to breaking
- $\eta^*$ indicates the complex viscosity in Pa.s at shear rate 0.1 $s^{-1}$, as determined in accordance with ISO 6721-10 (2015).
- $T_{b,m}$ is the peak melt temperature in °C as determined in accordance with ISO 11357-3 (2011), first heating run;
- $T_{p,c}$ is the peak crystallisation temperature in °C as determined in accordance with ISO 11357-1 (2009).

Of the material of each of the examples 1-9, fibers were spun by feeding pellets into a capillary rheometer (Gottfert, RG50) having a 15mm diameter channel. The material was them pushed out of a die of diameter 0.3-2mm (depending on the final diameter of fiber required) and length 10-30mm at a shear rate of 100 s-1 and temperature of 250 C. The melt coming out of the die was then spun using a haul-off unit (Gottfert) at speeds from 10mm/s-2000 mm/s. Prior to spinning the mixture was dried at 120 C for 4 hours.

Further, material of each of the examples 1-9 were converted to tapes by feeding pellets into a capillary rheometer (Gottfert, RG50) having a 15mm diameter channel. The material was them pushed out of a die having a rectangular cross section (0.5*1 mm) and a shear rate of 100 s-1 at 250 C. The melt coming out of the die had similar cross-section to that of the die. Prior to extrusion the mixture was dried at 120 C for 4 hours.

Certain material properties were further determined using the tapes and fibers prepared as above. Results thereof are presented in the table here below.

| Example | 1 | 1 | 5 | 5 |
|---|---|---|---|---|
| Sample type | Tape | Fiber | Fiber | Tape |
| $E_t$ | 850 | | 1850 | 2100 |
| $\mu$ | | 0.17 | 0.22 | |

Wherein $\mu$ is the coefficient of friction as determined using a Favimat+ friction testing device, wherein the lower clamp is a friction clamp, using as conditions a starting gauge length of 5 mm, test speed of 20 mm/min, elongation of 300%, and a pretention weight of 1.0 g.

During downward movement of the friction clamp, the force F is measured that is required to displace a calibrated pretension weight that applies a pulling force $F_p$ to the testing device in the regime of 10-90% of the total elongation of the fiber. The coefficient of friction is calculated using the Euler-Eytelwein equation:

$$\mu = \frac{1}{\alpha} \cdot ln\left(\frac{F}{F_p}\right)$$

Wherein $\alpha$ is the wrapping angle of the fiber in the friction device.

The above presented examples demonstrate fibers according to the invention to have improved fiber processability properties and improved mechanical properties, thereby rendering them suitable for use in applications where high durability of the fibers and good process economics in the fiber production stage are critical requirements.

## Claims

**1.** A composite fiber comprising

(a) a thermoplastic matrix polymer; and
(b) a plurality of fibrillated reinforcement material regions disposed within the thermoplastic matrix polymer;
wherein the melting temperature of the thermoplastic matrix polymer is lower than the melting temperature of the fibrillated reinforcement material, the melting temperature being determined as the peak melt temperature in accordance with ISO 11357-1 (2011), first heating run;
wherein the fibrillated reinforcement material comprises a thermoplastic material selected from an ultra-high molecular weight polyethylene (UHMWPE) or a polytetrafluorethylene (PTFE), wherein the thermoplastic material is encapsulated with a further thermoplastic material having a melting temperature of < 20°C above the melting temperature of the thermoplastic matrix polymer.

2. The composite fiber of claim 1, wherein the fiber has a diameter in the range of from about 2 micrometers to about 4 millimeters.

3. The composite fiber of any one of claims 1-2, wherein the melting temperature of the fibrillated reinforcement material is > 30°C, preferably > 50°C, even more preferably > 70°C above the melting temperature of the thermoplastic matrix polymer.

4. The composite fiber of any one of claims 1-3, wherein the melting temperature of the further thermoplastic material is < 10°C above the melting temperature of the thermoplastic matrix polymer.

5. The composite fiber of any one of claims 1-4, wherein the further thermoplastic material is a styrene-acrylonitrile copolymer.

6. The composite fiber of any one of claims 1-5, wherein the fibrillated reinforcement material comprises 10-90 wt% of the thermoplastic material and 10-90 wt% of the further thermoplastic material.

7. The composite fiber of any one of claims 1-6, wherein the composite fiber comprises 0.01 wt% to 15.0 wt%, preferably 0.25 wt% to 5.0 wt%, more preferably 0.50 wt% to 2.50 wt%, of the fibrillated reinforcement material, as measured against the total weight of the composite fiber.

8. The composite fiber of any one of claims 1-7, wherein the thermoplastic matrix polymer is selected from a polyalkylene terephthalate, preferably a polyethylene terephthalate or a polybutylene terephthalate, a polyalkylene naphthalate, preferably a polyethylene naphthalate, a polyphenylene oxide, a polycarbonate, a polystyrene, a polyamide, a polyolefin, or a combination thereof.

9. The composite fiber according to any one of claims 1-8, wherein the thermoplastic matrix polymer is polybutylene terephthalate.

10. The composite fiber according to claim 9, wherein the polybutylene terephthalate has an intrinsic viscosity of $\geq$ 0.50 and $\leq$ 2.00 dl/g, for example $\geq$ 0.70 and $\leq$ 1.30 dl/g, as determined in accordance with ASTM D2857-95 (2007).

11. The composite fiber according to any one of claims 1-10, wherein the fiber has a modulus in the range from about 0.5 to about 6 GPa, preferably from about 1 to about 4 GPa, determined in accordance with ISO 527-1 (2012).

12. Article comprising a plurality of composite fibers according to any one of claims 1-11, wherein the article is a woven article, a non-woven article, or a combination thereof, preferably wherein the article is a carpet.

13. A method comprising using a composite fiber according to claims 42-44 in additively manufacturing at least a portion of an article, preferably wherein the additively manufacturing comprises fused filament fabrication.

## Patentansprüche

1. Verbundfaser, umfassend:

(a) ein thermoplastisches Matrixpolymer; und
(b) eine Vielzahl von feinfaserigen Verstärkungsmaterialregionen, die innerhalb des thermoplastischen Matrixpolymers angeordnet sind;
wobei die Schmelztemperatur des thermoplastischen Matrixpolymers niedriger ist als die Schmelztemperatur des feinfaserigen Verstärkungsmaterials, wobei die Schmelztemperatur als Spitzenschmelztemperatur gemäß ISO 11357-1 (2011), erster Erwärmungslauf, bestimmt wird;
wobei das feinfaserige Verstärkungsmaterial ein thermoplastisches Material umfasst, das aus einem Polyethylen mit ultrahohem Molekulargewicht (UHMWPE) oder einem Polytetrafluorethylen (PTFE) ausgewählt ist, wobei das thermoplastische Material mit einem weiteren thermoplastischen Material verkapselt ist, das eine Schmelztemperatur von < 20 °C über der Schmelztemperatur des thermoplastischen Matrixpolymers aufweist.

2. Verbundfaser nach Anspruch 1, wobei die Faser einen Durchmesser im Bereich von etwa 2 Mikrometern bis etwa 4 Millimetern aufweist.

3. Verbundfaser nach einem der Ansprüche 1 bis 2, wobei die Schmelztemperatur des feinfaserigen Verstärkungsmaterials > 30 °C, vorzugsweise > 50 °C, noch bevorzugter > 70 °C über der Schmelztemperatur des thermoplastischen Matrixpolymers liegt.

4. Verbundfaser nach einem der Ansprüche 1-3, wobei die Schmelztemperatur des weiteren thermoplastischen Materials < 10 °C über der Schmelztemperatur des thermoplastischen Matrixpolymers liegt.

5. Verbundfaser nach einem der Ansprüche 1-4, wobei das weitere thermoplastische Material ein Styrol-Acrylnitril-Copolymer ist.

6. Verbundfaser nach einem der Ansprüche 1-5, wobei das feinfaserige Verstärkungsmaterial 10-90 Gew.-% des thermoplastischen Materials und 10-90 Gew.-% des weiteren thermoplastischen Materials umfasst.

7. Verbundfaser nach einem der Ansprüche 1 bis 6, wobei die Verbundfaser 0,01 Gew.-% bis 15,0 Gew.-%, vorzugsweise 0,25 Gew.-% bis 5,0 Gew.-%, noch bevorzugter 0,50 Gew.-% bis 2,50 Gew.-%, des feinfaserigen Verstärkungsmaterials umfasst, gemessen an dem Gesamtgewicht der Verbundfaser.

8. Verbundfaser nach einem der Ansprüche 1-7, wobei das thermoplastische Matrixpolymer ausgewählt ist aus einem Polyalkylenterephthalat, vorzugsweise einem Polyethylenterephthalat oder einem Polybutylenterephthalat, einem Polyalkylennaphthalat, vorzugsweise einem Polyethylennaphthalat, einem Polyphenylenoxid, einem Polycarbonat, einem Polystyrol, einem Polyamid, einem Polyolefin oder einer Kombination davon.

9. Verbundfaser nach einem der Ansprüche 1-8, wobei das thermoplastische Matrixpolymer Polybutylenterephthalat ist.

10. Verbundfaser nach Anspruch 9, wobei das Polybutylenterephthalat eine intrinsische Viskosität von ≥ 0,50 und ≤ 2,00 dl/g, zum Beispiel ≥ 0,70 und ≤ 1,30 dl/g, bestimmt nach ASTM D2857-95 (2007), aufweist.

11. Verbundfaser nach einem der Ansprüche 1-10, wobei die Faser einen Modul im Bereich von etwa 0,5 bis etwa 6 GPa, vorzugsweise von etwa 1 bis etwa 4 GPa, bestimmt nach ISO 527-1 (2012), aufweist.

12. Gegenstand, der eine Vielzahl von Verbundfasern nach einem der Ansprüche 1 bis 11 umfasst, wobei der Gegenstand ein gewebter Gegenstand, ein nicht gewebter Gegenstand oder eine Kombination davon ist, wobei der Gegenstand vorzugsweise ein Teppich ist.

13. Verfahren, umfassend die Verwendung einer Verbundfaser nach Anspruch 2 bei der additiven Fertigung mindestens eines Teils eines Gegenstands, wobei die additive Fertigung vorzugsweise die Schmelzfilamentfertigung umfasst.

## Revendications

1. Fibre composite comprenant

(a) un polymère à matrice thermoplastique ; et
(b) une pluralité de régions de matériau de renforcement fibrillé disposées à l'intérieur du polymère à matrice thermoplastique ;
dans laquelle la température de fusion du polymère à matrice thermoplastique est inférieure à la température de fusion du matériau de renforcement fibrillé, la température de fusion étant déterminée comme étant la température de fusion de crête conformément à la norme ISO 11357-1 (2011), premier cycle de chauffage ;
dans laquelle le matériau de renforcement fibrillé comprend un matériau thermoplastique choisi parmi un polyéthylène à poids moléculaire ultra élevé (UHMWPE) ou un polytétrafluoréthylène (PTFE), où le matériau thermoplastique est encapsulé avec un matériau thermoplastique supplémentaire ayant une température de fusion < 20°C au-dessus de la température de fusion du polymère à matrice thermoplastique.

2. Fibre composite de la revendication 1, dans laquelle la fibre a un diamètre dans la plage allant d'environ 2 micromètres

à environ 4 millimètres.

3. Fibre composite de l'une quelconque des revendications 1 et 2, dans laquelle la température de fusion du matériau de renforcement fibrillé est > 30°C, de préférence > 50°C, encore plus préférablement > 70°C au-dessus de la température de fusion du polymère à matrice thermoplastique.

4. Fibre composite de l'une quelconque des revendications 1 à 3, dans laquelle la température de fusion du matériau thermoplastique supplémentaire est < 10°C au-dessus de la température de fusion du polymère à matrice thermoplastique.

5. Fibre composite de l'une quelconque des revendications 1 à 4, dans laquelle le matériau thermoplastique supplémentaire est un copolymère styrène-acrylonitrile.

6. Fibre composite de l'une quelconque des revendications 1 à 5, dans laquelle le matériau de renforcement fibrillé comprend 10 à 90% en poids du matériau thermoplastique et 10 à 90% en poids du matériau thermoplastique supplémentaire.

7. Fibre composite de l'une quelconque des revendications 1 à 6, dans laquelle la fibre composite comprend 0,01% en poids à 15,0% en poids, de préférence 0,25% en poids à 5,0% en poids, plus préférablement 0,50% en poids à 2,50% en poids, du matériau de renforcement fibrillé, tels que mesurés par rapport au poids total de la fibre composite.

8. Fibre composite de l'une quelconque des revendications 1 à 7, dans laquelle le polymère à matrice thermoplastique est choisi parmi un téréphtalate de polyalkylène, de préférence un téréphtalate de polyéthylène ou un téréphtalate de polybutylène, un naphtalate de polyalkylène, de préférence un naphtalate de polyéthylène, un oxyde de polyphénylène, un polycarbonate, un polystyrène, un polyamide, une polyoléfine, ou une combinaison de ceux-ci.

9. Fibre composite selon l'une quelconque des revendications 1 à 8, dans laquelle le polymère à matrice thermoplastique est le téréphtalate de polybutylène.

10. Fibre composite selon la revendication 9, dans laquelle le téréphtalate de polybutylène a une viscosité intrinsèque $\geq$ 0,50 et $\leq$ 2,00 dl/g, par exemple $\geq$ 0,70 et $\leq$ 1,30 dl/g, telle que déterminée conformément à la norme ASTM D2857-95 (2007).

11. Fibre composite selon l'une quelconque des revendications 1 à 10, dans laquelle la fibre a un module dans la plage allant d'environ 0,5 à environ 6 GPa, de préférence d'environ 1 à environ 4 GPa, tel que déterminé conformément à la norme ISO 527-1 (2012).

12. Article comprenant une pluralité de fibres composites selon l'une quelconque des revendications 1 à 11, dans lequel l'article est un article tissé, un article non tissé, ou une combinaison de ceux-ci, de préférence dans lequel l'article est un tapis.

13. Procédé comprenant l'utilisation d'une fibre composite selon la revendication 2 dans la fabrication additive d'au moins une partie d'un article, de préférence dans lequel la fabrication additive comprend la fabrication de filaments fondus.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 03029536 A1
- WO 2004099314 A1
- WO 2015134316 A1
- WO 2015200780 A1
- US 7557154 B
- US 3933734 A
- EP 2103654 A
- US 20100069543 A1
- US 5121329 A
- US 20150183159 A
- US 20150183138 A
- US 20150183164 A
- US 8951303 B